# EUROPEAN PATENT APPLICATION

(11) **EP 1 232 889 A1**
(43) Date of publication of application: **21.08.2002**
(21) Application number: 02251095.2
(22) Date of filing: 18.02.2002
(51) Int. Cl.: B60J 7/06, B60J 7/08

(54) **An improved sheeting system**

(30) Priority: 16.02.2001 GB 0103862
(71) Applicant: Dawbarn and Sons Limited, Wisbech, Cambs PE13 1RL (GB)
(72) Inventor: Harrington, Benjamin, Wisbech, Cambs PE13 1RL (GB)
(74) Representative: Flynn, Michael Joseph

(57) **Abstract**

A system for removing and extending a sheet (11) across the open mouth of an open-mouthed container body (10) includes a pole (16a), disposed along the centre of the sheet (11). A tensioning shaft (20) is rotatably mounted on the side of the container body (10) and operably connected to a side of the sheet (11). The shaft (20) is rotated by a motor (24), the rotation causing the sheet (11) to be extended across the body (10).

A motor (25) is mounted at an end of the central pole (16a) and causes the pole (16a) to rotate during retraction of the sheet (11), thereby wrapping the sheet (11) around the pole (16a) and opening the mouth of the container.

Arches (12,13,14) are provided across the mouth of the body (10) to support the central pole (16a) and put the sheet (11) under tension. The central arch (14) can include a web guide (18) to guide a strap (17) used to attach the tension shaft (20) to the sheet (11).

## Description

### Field of the Invention

The present invention relates to a sheeting system for covering a load drawn by a vehicle and more particularly a system of the type commonly known as a roll-over system, having a central support pole for the sheeting.

### Background to the Invention

The use of sheeting systems to cover a load on a transport vehicle are well known. Certain vehicle bodies are constructed having guides for a sheet, the guides having an arched shape, over which the sheet is pulled. The arch enables the sheet to be pulled across the vehicle and raises it above the load being covered. Rollers are provided around which the sheet is wrapped when the load is uncovered, the system being known as a roll-over system. One type of sheeting system which is widely used has a pole, located in a central pocket of the sheet, which pole supports the sheet when it is extended across the load and reduces sagging of the sheet.

There are problems involved with present roll-over systems. The principal problem, is that the sheet must be stowed and extended manually by means of handles operatively linked to the rollers. Such manual systems are time consuming to operate and require the operator, usually the driver of the vehicle to be beside the vehicle. Regulations are increasingly making this practice illegal as it can expose the operator to danger from other vehicles and activities in the vicinity of the vehicle. Furthermore, manual systems are not always easy to operate, requiring a degree of physical strength and can moreover be slow to operate. The latter problem can result, when it is raining or snowing for example, in the load increasing in weight, which must be borne by the vehicle until the water drains away.

It is an object of the present invention to provide a motorised system to extend and stow a sheet across a vehicle which addresses the problems given above.

### Summary of the Invention

According to a first aspect of the invention there is provided a cover apparatus for extending and retracting a sheet/web over the mouth of an open-topped container body the cover apparatus comprising:
a sheet/web having a first edge fixed to one side of the container mouth and a free edge for drawing over the container mouth and resealably securing to the opposite side thereof, the sheet/web defining pole pockets into which support or tensioning poles are locatable;
a free-edge pole locatable within a pocket along said free edge of the sheet and connected to a tensioning means on one side of the container body;
a pole locatable in a central pocket of the sheet/web and rotatable with respect thereto so as to accumulate and dispense cover web material when the cover is being retracted and extended, respectively.

The apparatus enables a load to be covered and uncovered easily and reduces the risk of injury to personnel which is normally present when performing this operation.

Advantageously, the tensioning means is linked to the support pole by one or more straps. The tensioning means is preferably a rotatable shaft linked to the free-edge pole. Optionally, the tensioning shaft has one or more guide means to guide the or each strap as the or each strap is rolled up during extension of the sheet. The guides ensure that the straps roll up and unfurl in a smooth and even fashion. The tensioning shaft preferably has a cover along at least part of its length to prevent injury to an operator whilst the shaft is rotating.

The apparatus prefrerably includes a first motor to drive the tensioning means to extend the sheet. Furthermore, the apparatus preferably includes a rotation motor to rotate the centrally disposed pole and remove the sheet from above the container body. The operator is thereby freed from having to perform the manual work and the safety of the operation is increased.

Conveniently, an arch is provided at either end of the container body to support the ends of the centrally disposed pole. The arches lift the sheet away from the load and also provide a smooth track across which the ends of the poles can move.

Preferably, the apparatus includes a central arch across the container body to reduce sagging in the extended sheet.

The arch advantageously has a groove located along its length to provide a channel is which a strap between the tensioning shaft and the sheet can be housed as the sheet is removed from the container body and so prevent the strap from snagging or from coming into contact with the load being carried.

The extension and retraction of the extendible arm is advantageously controlled by a motorised means to enable the sheet to be extended and removed in a smooth fashion.

### Brief Description of the Drawings

The invention will now be described with reference to the accompanying drawings, which show by way of example one embodiment of a motorised roll-over sheeting system. In the drawings:
Figure 1 is a perspective view of the load-carrying body of a vehicle with the sheet rolled back;
Figures 2a and 2b are, respectively a front view of the central arch and a partial front view of the central arch showing the sliding mount;
Figure 3 is a perspective view of a tensioning strap passing along the web guide of the central arch, with the sheet in a partially open position;
Figure 4 is a perspective view of a tensioning shaft with the tensioning strap unrolled;
Figure 5 is a perspective view of the front of the load-carrying body; the sheeting being in a rolled up position and showing a first embodiment of a mounting arm;
Figure 6 is a perspective view of a sheet in a partially extended confirmation;
Figure 7 is a perspective view of a tensioning shaft showing a sheet fully extended;
Figure 8 shows a second embodiment of a mounting arm; and
Figure 9 is a perspective view of the front of a container body including the second embodiment of a mounting arm.

### Detailed Description of the Invention

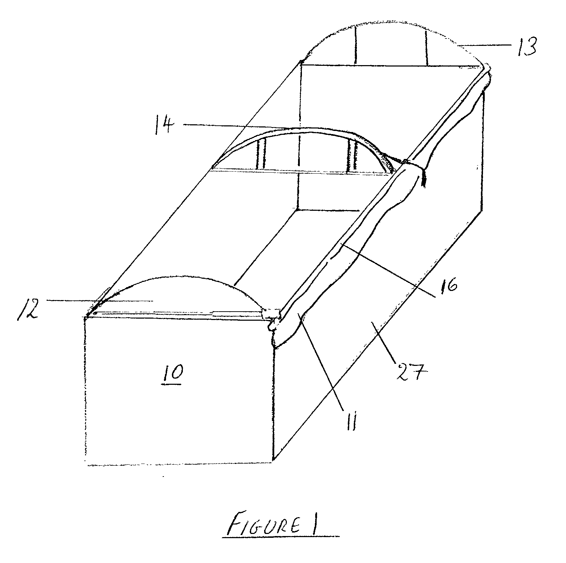

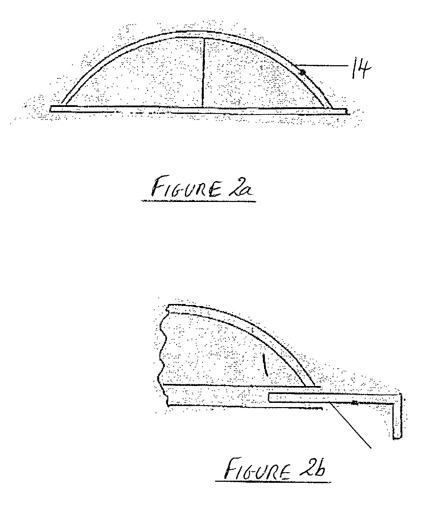

Referring initially to Figures 1 and 2, these show the general layout of a load-carrying body 10 of a vehicle, looking towards the rear of the vehicle. A sheet 11 is shown in a stowed configuration, which enables a load to be loaded into the body 10. When the load is in place, the sheet 11 is pulled across the body 10 to cover the load and protect the load from, for example, rain or dust. When the load is to be discharged, the sheet 11 can be pulled back across the body 10 and returned to the stowed configuration. In order to enable the sheet 11 to have sufficient clearance above the load, arches 12, 13 and 14 are provided at the front, rear and middle respectively of the body 10. The central arch 14 is supported at either end by the body 10 and is mounted on sliding hoop joints 15 to enable the arch 14 to be easily fitted to vehicles of different sizes.

To facilitate the motion of the sheet 11 across the body 10, and to reduce damage to the sheet 11, a pole 16 is included in a pocket running the length of the edge of the sheet 11. When force is applied to pull the sheet 11 across the body 10, the force can initially act to pull the pole 16. The result of this is that the force is distributed evenly along the length of the sheet 11, reducing the risk of tearing the sheet 11 and affording smoother motion of the sheet 11.

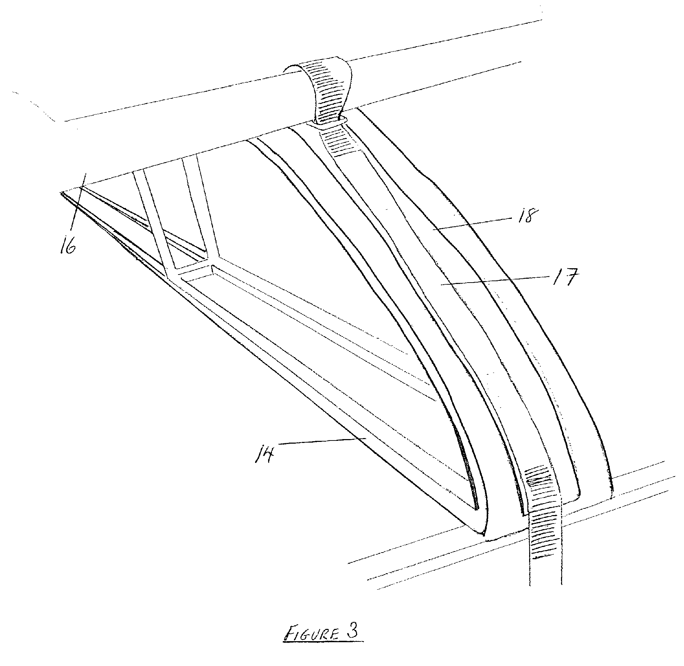

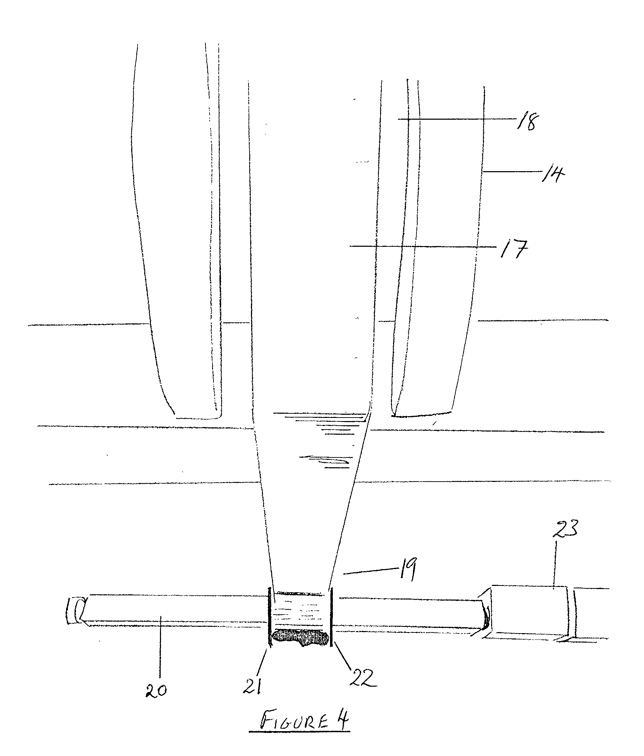

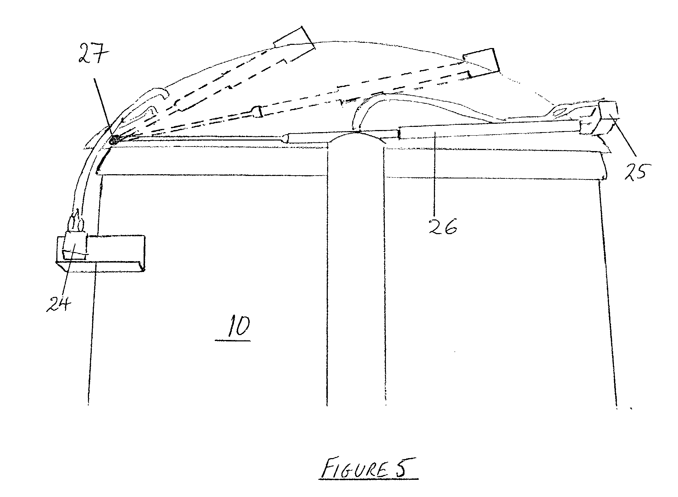

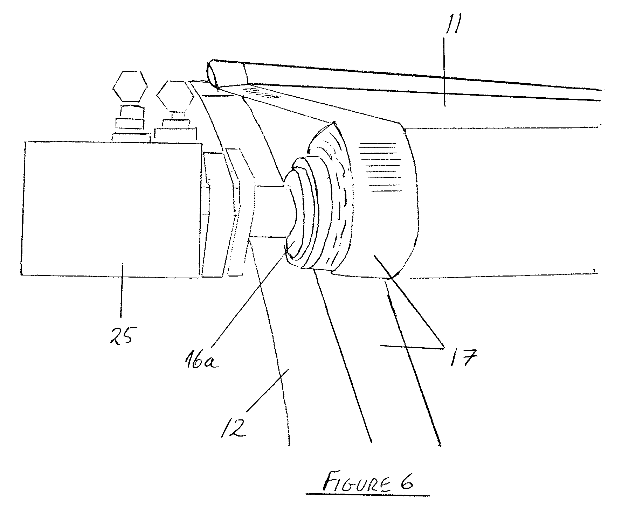

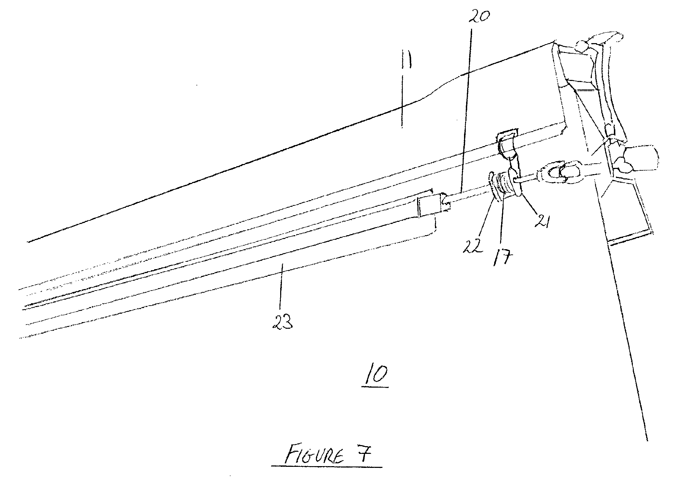

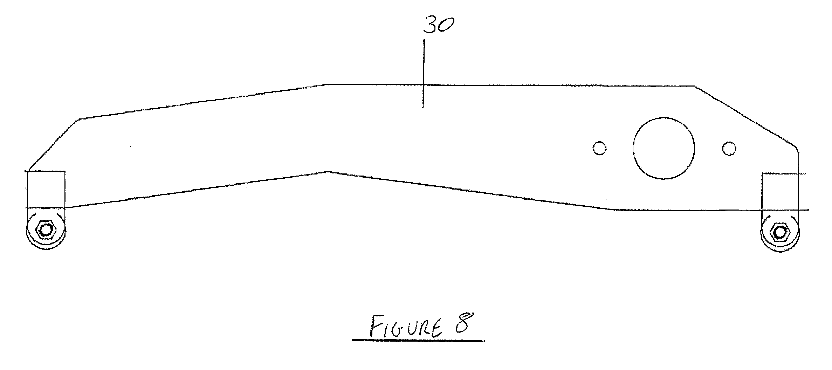

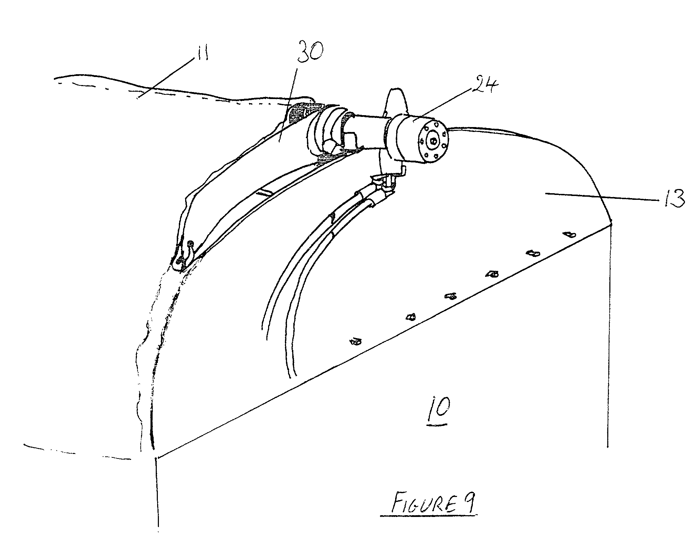

Turning to Figures 3 and 4, these illustrate the means by which the sheet 11 is pulled across the body 10. Three tensioning straps 17 are looped, at one end, about the pole 16, one strap 17 being at each end and one about the middle of the pole 16. Each strap 17 passes across - when the sheet 11 is in the stowed configuration - the corresponding arch 12, 13, 14. In order to better retain the strap 17 the central arch 14 has a webbing guide 18 to accommodate the strap 17 and restrict its lateral motion.

With reference now to Figures 5 to 7, the other end 19 of each strap 17 is secured to a rotatable tensioning shaft 20. In order to align the strap 17, guide discs 21, 22 are provided. As the tensioning shaft 20 rotates, the guide discs 21, 22 ensure that the strap 17 unfurls from or winds onto correctly, the tensioning shaft 20. A cover 23 is provided over the majority of the tensioning shaft 20 to reduce the risk of an operator injuring themselves by coming into contact with the shaft 20 whilst the shaft 20 is rotating.

Rotation of the tensioning shaft 20 is controlled and powered by a motor 24, which is mounted to the body 10. In order to facilitate movement of the sheet 11 across the container body 10 particularly when uncovering the load containing body 10, a hydraulic motor 25 is included. The motor 25 causes the central pole 16a, located along the central pocket of the sheet 11, to rotate. The motor 25 is itself mounted on a two-way telescopic mechanical arm 26.

In use, in order to extend the sheet 11 across the load-carrying body 10 of the vehicle, the motor 24 is activated causing the tensioning shaft 20 to rotate. The rotation of the tensioning shaft 20 wraps the tensioning strap 17 around the tensioning shaft 20. The tension thereby applied to the sheet 11 pulls it across the body 10 of the vehicle. In the embodiments shown in the attached drawings, three tensioning straps 17 link the pole 16 to the sheet 11. Two of the straps 17 are attached one at each end of the pole 16, whilst the third is attached substantially centrally to the pole 16 and passes over the central arch 14. The motor 24 continues to turn the pole 16 until the sheet 11 is fully extended over the body 10. During the sheet extension, the motor 25 controlling the central pole 16a remains inactive and the motor 25 is pulled along with the central pole 16a. The pivotally mounted telescopic arm 26 telescopes shut as the distance between the motor 25 and the pivot point 27 diminishes.

In order to carry out the retraction of the sheet 11 from above the load-carrying body 10, the motor 25 is activated. The motor 25 causes the central pole 16a to rotate and wrap the sheet 11 to either side of the central pole 16a, about the central pole 16a. The rotational action considerably eases the removal and storing of the sheet 11. As the width of the sheet 11 between the central pole 16a and the side of the body 10 reduces, the sheet 11 together with the central pole 16a is pulled towards the side 28. At the same time, the sheet 11 on the other side of the central pole 16a is also rolled up. As the central pole 16a reaches the side 28 therefore, the sheet 11 is fully wrapped about the central pole 16a. As the sheet 11 is retracted from the load-carrying body 10, the motor 24 for the tensioning shaft 20 remains inactive.

In a second embodiment of a mounting arm for the motor 24 a rigid torque arm 30, as shown in Figures 8 and 9 can be used. The torque arm 30 is movable between a first position on the side of the load carrying body 10 - when the sheet 11 is retracted - and a second position at the top of the arch 13 - when the sheet is extended. As the torque arm 30 moves between the two positions it moves the motor 24 and hence the central pole 16a.

The central arch 14 can be fixed to the body 10 be means of brackets to prevent it from spinning over. Sliding pins can also be provided to the central arch support to account for any flexing of the body 10, as tension increases and decreases during sheet extension or removal. When the vehicle is small enough, the central arch 14 can be dispensed with as the side pole should have sufficient strength to maintain the tension in the sheet 11 and to keep the sheet 11 taut.

The system can be operated by remote control, either by a hand-held set or a set located in the control panel of the vehicle. The operator can therefore operate the entire system from the safety of the vehicle's cab. The radio transmitter will typically be set at 433 meg and have a range of 5m to minimise the risk of interference of the transmitted signal with signals from other vehicles.

The motors described above will typically have a capacity of 160cc. The hydraulic oil contained within the motors can be food safe should any leakage occur into the body of the vehicle. Power for the motors can be from one or more batteries located on the vehicle often within the body 10. Alternatively power can be derived from the vehicle's engine. A typical power pack for the motors will supply 24V DC, to give 5 litres per minute of oil at 2000psi.

The arms are typically laser cut from 20mm 3B plate. The centre pole can be made from aluminium, whilst the side poles will more normally made from CHS cold formed.

The system can be retro-fitted to existing vehicles. In addition to or as an alternative to a motor driving the rotation of the central pole (16a) an energy storage device can be incorporated into the apparatus. The storage device, such as a spring, can store energy as the sheet (11) is extended across the body (10). The energy can then be released to retract the sheet (11). When desired a mechanical means, not driven by a motor, can be included in order to extend or retract the sheet (11).

Throughout the specification the term "sheet" should also be taken to include material in the form of a web. It will of course be understood that the invention is not limited to the specific details described herein, which are given by way of example only, and that various modifications and alterations are possible within the scope of the invention.

## Claims

1. A cover apparatus for extending and retracting a sheet (11) over the mouth of an open-topped container body (10) the cover apparatus comprising:
a sheet (11) having a first edge fixed to one side of the container mouth and a free edge for drawing over the container mouth and resealably securing to the opposite side thereof, the sheet (11) defining pole pockets into which support or tensioning poles (16,16a) are locatable;
a free-edge pole (16) locatable within a pocket along said free edge of the sheet and connected to a tensioning means (20) on one side of the container body (10);
a pole (16a) locatable in a central pocket of the sheet (11) and rotatable with respect thereto so as to accumulate and dispense cover sheet (11) material when the cover is being retracted and extended, respectively.

2. A cover apparatus according to Claim 1, **characterised in that** the tensioning means (20) is linked to the edge pole (16) by one or more straps (17).

3. A cover apparatus according to either Claim 1 or Claim 2, **characterised in that** the tensioning means (20) is a shaft.

4. A cover apparatus according to Claim 3, **characterised in that** the tensioning shaft (20) has one or more guide means (21,22) to guide the or each strap (17) as the or each strap (17) is rolled up during extension of the sheet (11).

5. A cover apparatus according to any preceding claim, **characterised in that** the tensioning means (20) has a cover along at least part of its length to prevent injury to an operator whilst the shaft (20) is rotating.

6. A cover apparatus according to any preceding claim, **characterised in that** the apparatus includes a first motor (24) to drive the tensioning means (20) to extend the sheet (11).

7. A cover apparatus according to any preceding claim, **characterised in that** the apparatus includes a rotation motor (25) to rotate the centrally disposed pole (16a) and remove the sheet (11) from above the container body (10).

8. A cover apparatus according to any preceding claim, **characterised in that** an arch (12,13) is provided at either end of the container body (10) to support the ends of the centrally disposed pole (16a).

9. A cover apparatus according to Claim 8, **characterised in that** the apparatus includes a central arch (14) across the container body (10) to reduce sagging in the extended sheet (11).

10. A cover apparatus according to Claim 9, **characterised in that** the arch (14) has a groove (18) along its length to provide a channel for a strap (17).

11. A cover apparatus according to any preceding claim, **characterised in that** the rotation motor (25) is mounted on a telescopic arm.

12. A cover apparatus substantially as herein described with reference to and as illustrated in the accompanying drawings.
